# EUROPÄISCHE PATENTSCHRIFT

(11) **EP 1 227 017 B1**
(45) Veröffentlichungstag und Bekanntmachung des Hinweises auf die Patenterteilung: **07.04.2004**
(21) Anmeldenummer: 01102067.4
(22) Anmeldetag: 30.01.2001
(51) Int. Cl.: B60R 25/04

(54) **Verfahren zum Betreiben eines Zugangskontrollsystems, insbesondere für ein Kraftfahrzeug, und Zugangskontrollsystem**
Method to operate an access control system, in particular for motor vehicles, and access control system
Procédé pour la mise en oeuvre d'un système de contrôle d'accès, notamment pour un véhicule automobile, et système de contrôle d'accès

(43) Veröffentlichungstag der Anmeldung: 31.07.2002
(73) Patentinhaber: SIEMENS AKTIENGESELLSCHAFT, 80333 München (DE)
(72) Erfinder: Bergerhoff, Nikolas, 93047 Regensburg (DE)

(56) Entgegenhaltungen:
- DE-A- 4 329 697
- DE-A- 19 926 748
- US-A- 4 595 902

## Beschreibung

Die Erfindung betrifft ein Verfahren zum Betreiben eines Zugangskontrollsystems, mit dem der Zugang insbesondere zu einem Kraftfahrzeug nur bei Nachweis einer Berechtigung durch einen Codegeber freigegeben wird.

Bei einem bekannten Diebstahlschutzsystem (DE 43 29 697 C2) (Oberbegrift von Anspruch 1 und 9) führt der Fahrzeugnutzer einen sogenannten elektronischen Codegeber (z.B. in Form einer Scheckkarte) zum Entriegeln seines Fahrzeuges mit sich. Sobald ein Betätigungsmittel am Kraftfahrzeug, wie beispielsweise ein Türgriff, betätigt wird, veranlasst die fahrzeugseitige Steuereinheit das Aussenden eines Anforderungssignals. Wird das Anforderungssignal im Codegeber empfangen, so sendet dieser automatisch sein ihm charakteristisches Antwortcodesignal zurück, um mit diesem seine Berechtigung zum Benutzen des Kraftfahrzeugs nachzuweisen. Wird das Antwortcodesignal als berechtigt erkannt, so werden die Türen des Kraftfahrzeugs entriegelt.

Ein sogenannter Frage-Antwort-Dialog (Challenge-Response) findet analog statt, wenn der Benutzer sich im Fahrzeuginneren aufhält und das Fahrzeug starten möchte. Bei Berechtigung des Codegebers wird dann die Wegfahrsperre gelöst und das Kraftfahrzeug kann gestartet werden.

Potenzielle Autodiebe könnten die drahtlos übertragenen Signale zwischen Fahrzeug und Codegeber abhören und widerrechtlich wiedergeben, um Zugang zu dem Kraftfahrzeug zu erhalten.

Daher ist es Aufgabe der Erfindung, ein verbessertes Zugangskontrollsystem zu schaffen, bei dem ein Abhören und Wiedergeben der übertragenen Signale erschwert wird. Insbesondere soll im Kraftfahrzeug überprüft werden, ob das empfangene Antwortsignal von einem dem Kraftfahrzeug zugeordneten, rechtmäßigen Codegeber stammt oder ob das Signal gerade von einem Unberechtigten wiedergegeben wurde.

Diese Aufgabe wird erfindungsgemäß durch ein Verfahren zum Betreiben eines Zugangskontrollsystems mit den Merkmalen von Patentanspruch 1 gelöst. Dabei findet ein Dialog zwischen Kraftfahrzeug und Codegeber bei gleicher Trägerfrequenz statt. Zudem senden innerhalb vorgegebener Zeitdauern (Überlappung von Sendephasen) sowohl eine fahrzeugseitige Sende- und Empfangseinheit als auch ein elektronischer Codegeber. Dadurch überlagern sich in diesen Zeitdauern die ausgesendeten Signale. Das so entstehende Überlagerungssignal ist das neue, charakteristisches Codesignal, dessen codierter Inhalt ausgewertet und auf seine Berechtigung überprüft wird.

Für einen potenziellen Dieb stellt sich das Problem, dass er an einem Ort (innerhalb der Sende- und Empfangsreichweite der Sende- und Empfangseinheit des Fahrzeugs oder in der Sendeund Empfangsreichweite des Codegebers) einerseits ein abgehörtes Signal wiedergeben muss und zeitgleich ein Signal bei gleicher Trägerfrequenz abhören muss. Dies wird mit dem erfindungsgemäßen Verfahren weitgehend verhindert, weil das zeitgleiche Senden des abgehörten Signals den abhörenden Empfänger stört (gleiche Trägerfrequenz).

Vorteilhafte Ausgestaltungen der Erfindung sind in den Unteransprüchen gekennzeichnet.

Ausführungsbeispiele der Erfindung werden im Folgenden anhand der schematischen Zeichnungen näher erläutert. Es zeigen:
- Figur 1: ein Kraftfahrzeug mit einem erfindungemäßen Diebstahlschutzsystem und
- Figuren 2, 3 und 4A bis 4D: Impulsdiagramme von Signalen, die bei dem Diebstahlschutzsystem nach Figur 1 zwischen Fahrzeug und Codegeber übertragen werden.

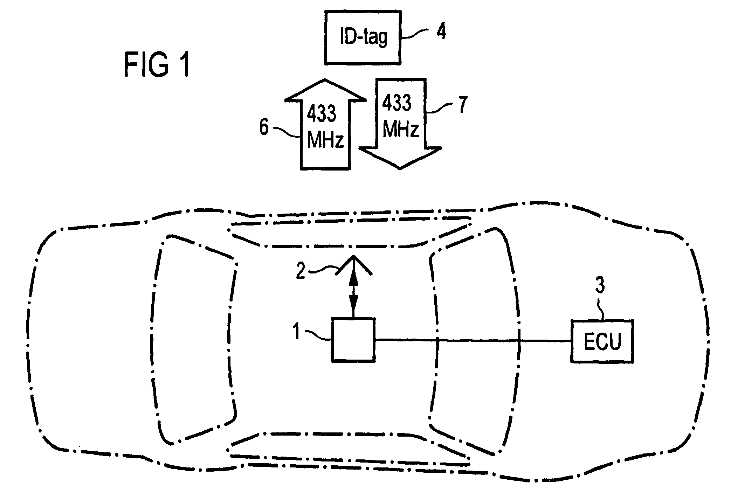

Ein Diebstahlschutzsystem für ein Kraftfahrzeug weist eine fahrzeugseitige Sende- und Empfangseinheit 1(auf Figur 1) auf, die über eine oder mehrere Antennen 2 Signale aussenden und welche empfangen kann. Die Sende- und Empfangseinheit 1 wird von einem Steuergerät 3 zum Senden oder Empfangen und zum Modulieren oder Demodulieren von Signalen gesteuert. Das Auswerten der empfangenen und demodulierten Signale geschieht vorzugsweise in dem Steuergerät 3.

Außerdem weist das Diebstahlschutzsystem einen tragbaren Codegeber 4 (in der Figur 1 als ID-tag bezeichnet) auf, welcher ebenfalls eine Sende- und Empfangseinheit aufweist. Die ccdegerberseitige Sende- und Empfangseinheit kann über eine oder mehrere nicht dargestellte Antennen Signale senden und empfangen. Insbesondere sendet sie eine für den Codegeber 4 charakteristische Codeinformation aus, mit welcher der Codegeber 4 seine Berechtigung zum Ver- oder Entriegeln des Kraftfahrzeugs oder zum Lösen der Wegfahrsperre nachweist.

Das Schließsystem und die Wegfahrsperre sind Sicherheitsaggregate, die bei vorliegender Berechtigung über den Codegeber 4 gesteuert werden können.

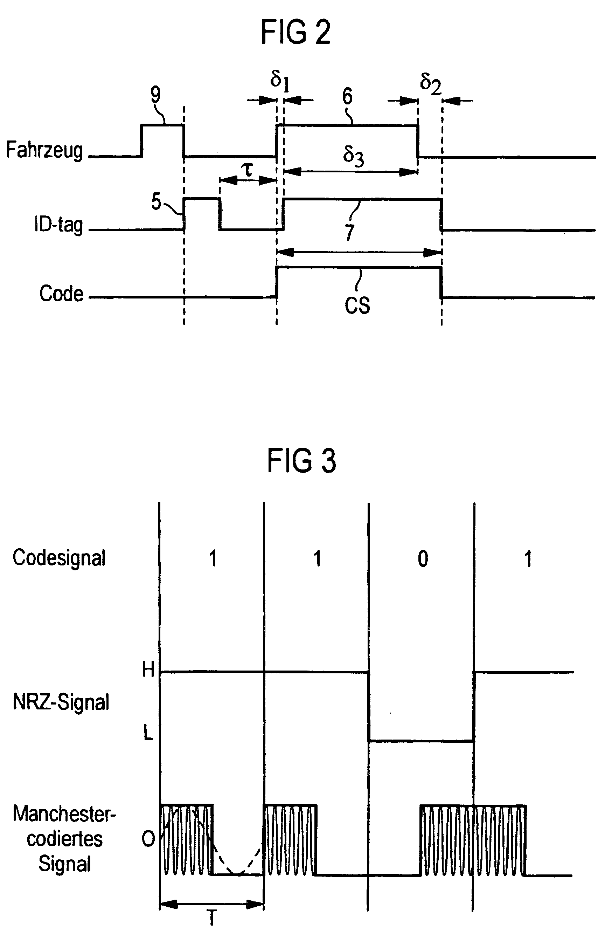

Wenn ein Benutzer ein Auslösemittel (Türgriff oder Schalter am oder in der Nähe des Türgriffs) am Kraftfahrzeug manuell betätigt, so wird zunächst ein Aufwecksignal 9 (Figur 2) von der fahrzeugseitigen Sende- und Empfangseinheit 1 ausgesendet. Falls ein Codegeber 4 das Aufwecksignal 9 empfängt, so sendet er seinerseits zunächst ein Startsignal 5, welches zur zeitlichen Synchronisation zwischen der Sende- und Empfangseinheit des Codegebers 4 und der Sende- und Empfangseinheit 1 des Fahrzeugs dient..

Unmittelbar nach dem Aussenden oder auch nach einer festgelegten Zeitdauer τ + δ₁ nach dem Aussenden des Startsignals 5 sendet der Codegeber 4 ein erstes Signal 7. Unmittelbar nach dem Empfang oder auch nach einer festgelegten Zeitdauer τ nach dem Empfang des Startsignals 5 sendet das Fahrzeug ein zweites Signal 6 zeitlich überlappend (die Zeitdauer δ₃ überlappend) mit dem ersten Signal 7.

Das Startsignal 5 kann selbstverständlich auch von der Sende- und Empfangseinheit 1 im Kraftfahrzeug ausgesendet werden, um den Codegeber 4 und die fahrzeugseitige Sende- und Empfangseinheit 1 zu synchronisieren.

Wesentlich für die Erfindung ist es, dass das erste Signal 7 und das zweite Signal 6 etwa zeitgleich bei der gleichen Trägerfrequenz ausgesendet werden, so dass sich die beiden Signale 6 und 7 teilweise oder abschnittsweise zeitlich überlappen (beim Ausführungsbeispiel um die Zeitdauer δ₃).Dadurch dass die beiden Signale etwa zeitgleich gesendet werden, entsteht ein Überlagerungssignal (wird im folgenden als Codesignal CS bezeichnet), welches sowohl von der codegeberseitigen Sende- und Empfangseinheit als auch von der fahrzeugseitigen Sende- und Empfangseinheit 1 empfangen wird.

Das Codesignal CS enthält eine Codeinformation, die sich aus den Codeinformationen des ersten und des zweiten Signals 6,7 zusammensetzt und sowohl von der Sende- und Empfangseinheit 1 als auch von dem Codegeber 4 ausgewertet werden kann.

Hierzu wird die Codeinformation mit einer Sollcodeinformation verglichen. Nur bei Übereinstimmung mit der Sollcodeinformation wird ein Freigabesignal erzeugt, wodurch entweder die Sicherheitsaggregate freigegeben werden oder ein Frage-Antwort-Dialog zwischen Kraftfahrzeug und Codegeber 4 ausgelöst wird, der dann bei dabei gegebener Berechtigung zu einer Freigabe der Sicherheitsaggregate führen kann. Beim Frage-Antwort-Dialog ist keine zeitliche Überlappung der Signale 6 und 7 mehr notwendig.

Das erste Signal 7 und das zweite Signal 6 werden zeitlich überlappend bei etwa gleicher Trägerfrequenz ausgesendet und vorteilhafterweise amplitudenmoduliert (AM-Modulation). Eine Möglichkeit für die AM-Modulation ist das OOK (On-Off-Keying), bei der das Trägersignal im Takte der Modulation ein- und ausgeschaltet wird. Anstatt das Trägersignal vollkommen auszuschalten, kann es auch mit stark reduzierter Amplitude gesendet werden.

Binäre Signale werden mit einer bestimmten elektrischen Signalform übertragen. Hierzu kommen alle bekannten Verfahren in Betracht, z.B. das NRZ Verfahren oder die Manchestercodierung (vgl. Figur 3). Vorteilhafterweise wird in der Automobiltechnik die Manchestercodierung verwendet, da sich diese besonders gut zur Taktrückgewinnung und damit zur Synchronisation zwischen Sender und Empfänger eignet.

In Figur 3 ist ein Teil einer binären Codeinformation mit dem logischen Werten "0" und "1" der einzelnen Bits dargestellt. Diese Codeinformation kann durch NRZ- Signale (Non Return to Zero) mit den logischen Zuständen "H" und "L" für jedes Bit dargestellt werden. Ein solches Signal kann beispielsweise im Manchestercode (codiertes Format) dargestellt werden. Beim Manchestercode wird eine Trägerschwingung (die mit der Trägerfrequenz schwingt) innerhalb eines Bits (d.h. innerhalb der Impulsdauer T eines einzigen Bits) einmal voll (oder auch nur teilweise, das heißt mit reduzierter Amplitude) und einmal gar nicht bezüglich der Amplitude ausgetastet (auch als On-Off-Keying bezeichnet). Ein Signal mit dem logischen Wert "1" wird durch einen Impuls der Länge T/2 in der ersten Hälfte der Impulsdauer T erzeugt, während ein Signal mit dem Wert "0" durch einen Impulszug der Länge T/2 in der zweiten Hälfte erzeugt wird. Die real erhaltene Hüllkurve (ideal wäre es eine Rechteckschwingung) ist durch eine punktierte Linie in Sinusform der Figur 3 dargestellt.

Die Signale 6 und 7 sind derart aufgebaut, dass in bestimmten Zeitabschnitten δ₁ nur die fahrzeugseitige Sende- und Empfangseinheit 1 sendet, in bestimmten Zeitabschnitten δ₂ nur die codegeberseitige Sende- und Empfangseinheit sendet und in bestimmten Zeitabschnitten δ₃ sowohl das Fahrzeug als auch der Codegeber zeitgleich eine Trägerschwingung aussenden (vgl. Figur 2). Das Codesignal CS umfasst die gesamte Zeitdauer δ₁ + δ₂ + δ₃.

Die einzelnen Impulszüge der jeweiligen Signale 6, 7 müssen nicht einheitliche Signaldauern haben. Sie können bei jedem Aussenden eine andere Signaldauer aufweisen. Die Signaldauern können beispielsweise durch Zufallsgeneratoren in Sende- und Empfangseinheit 1 und/oder Codegeber 4 erzeugt werden. Damit eine korrekte Erkennung der übertragenen Codeinformationen möglich ist, wird die jeweilige Signaldauer der jeweils empfangenen Einheit verschlüsselt mitgeteilt.

Vorteilhafterweise werden Trägerfrequenzen von 315 MHz, 433 MHz oder 868 MHz verwendet, weil diese bereits heute für Funkfernbedienungen in der Automobiltechnik genutzt werden und auch in vielen Ländern zugelassen sind. Selbstverständlich können auch andere Trägerfrequenzen genutzt werden. Voraussetzung ist jedoch, dass sowohl die fahrzeugseitige Sende- und Empfangseinheit 1 als auch die codegebeseitige Sende- und Empfangseinheit mit der gleichen Trägerfrequenz arbeiten.

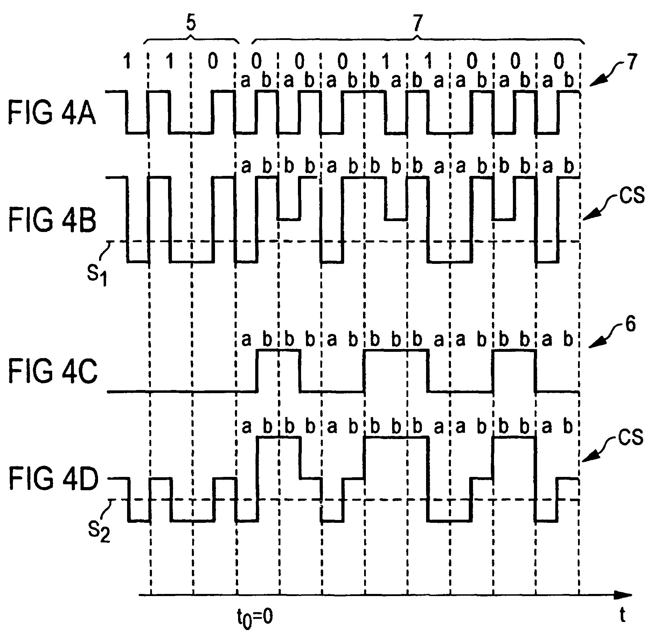

Im Folgenden wird die Erzeugung des Codesignals CS aus dem ersten Signal 7 und dem zweiten Signal 6 beispielhaft anhand der Figuren 4A bis 4D näher erläutert. Dabei ist in der Figur 4A das Startsignal 5 und das erste Signal 7 des Codegebers 4 dargestellt, wie es von diesem ausgesendet wird.

In der Figur 4B ist ein Signal dargestellt, wie es vom Codegeber 4 empfangen wird. In der Figur 4C ist das zweite Signal 6 dargestellt, das von der Sende- und Empfangseinheit 1 ausgesendet wird und in der Figur 4D ein Signal, wie es von der Sende- und Empfangseinheit 1 im Kraftfahrzeug empfangen wird.

Das in der Figur 4A dargestellte Signal ist vorteilhafterweise ein gültiges manchester-codiertes Signal (angedeutet durch die Ziffern "1" und "0"). Der Buchstabe "a" markiert in den Figuren 4A bis 4D Zeitabschnitte, in denen kein Trägersignal gesendet oder empfangen wird. Der Buchstabe "b" markiert Zeitabschnitte, in denen ein Trägersignal gesendet oder empfangen wird. In den Figuren 4B und 4D markiert die Höhe der dargestellten Signalabschnitte die Empfangsfeldstärke (Amplitude). Diese ist immer dann besonders hoch, wenn der lokale Sender ein Trägersignal sendet, weil der Empfänger ein in unmittelbarer Nähe abgestrahltes Trägersignal stärker empfängt als ein von einem entfernten Sender gesendetes Trägersignal.

Zusätzlich sind in den Figuren 4B und 4D noch Entscheidungsschwellen S₁ und S₂ eingezeichnet. Unterhalb der jeweiligen Entscheidungsschwelle S₁ oder S₂ entscheidet der jeweilige Empfänger auf "kein Trägersignal" (entspricht dem Zustand "a"), oberhalb der Entscheidungsschwelle entscheidet der jeweilige Empfänger auf "Trägersignal vorhanden" (entspricht dem Zustand "b").

Bei der Erfindung wird das zweite Signal 6 über die Sendeantenne 2 der fahrzeugseitigen Sende- und Empfangseinheit 1 ausgesendet und das erste Signal 7 über die nicht dargestellte Sendeantenne des Codegebers 4. Über die jeweiligen Empfangsantennen werden einerseits das von der eigenen Sendeantenne gesendete Signal als auch das von der gegenüberliegenden Seite gesendete Signal empfangen.

Allerdings empfängt eine Seite nur das selbst ausgesendete Signal, solange dessen Amplitude größer als Null ist (d.h. diese Seite ist in diesem Fall "taub" für die andere Seite) und die eine Seite empfängt nur dann das Signal der anderen Seite, wenn sie selbst nicht sendet (d.h. die Sendeamplitude Null ist). Daher müssen Codegeber 4 und fahrzeugseitige Sende- und Empfangseinheit 1 bezüglich der ausgesendeten Codeinformation aufeinander abgestimmt sein. Dies kann bei einer Programmierung der Teile am Bandende beim Fahrzeughersteller den Teilen mitgeteilt werden oder durch einen Rechenalgorithmus vor jeder Übertragung neu berechnet werden (Rechenalgorithmus wird bei einer Initialisierung oder Programmierung implementiert).

Zunächst startet der Codegeber 4 mit einigen Startbits (Startsignal 5; vgl. Figur 4A), wodurch der Codegeber 4 und die fahrzeugseitige Sende- und Empfangseinheit 1 synchronisiert werden. Es können sowohl die fahrzeugseitige Sende- und Empfangseinheit 1 als auch der Codegeber 4 ein Startsignal 5 aussenden, wobei das Senden des ersten Signals 7 und des zweiten Signals 6 infolge des empfangenen Startsignals 5 eine festgelegte Zeitdauer danach gestartet wird.

In dem Ausführungsbeispiel sendet der Codegeber 4 einige Startbits und danach die Codeinformation "abababbabaababab" (Figur 4A). Vor oder nach der Codeinformation können noch weitere Steuerinformationen gesendet werden, die die Codeinformation nicht beeinflussen dürfen.

Etwa zeitgleich mit der Codeinformation des Codegebers 4 sendet die fahrzeugseitige Sende- und Empfangseinheit 1 ihre Codeinformation, und zwar in dem vorliegenden Ausführungsbeispiel "abbaaabbbaaabbaa" (Figur 4C). Der Codegeber 4 empfängt gemäß Figur 4B sowohl die von ihm selbst ausgesendete Codeinformation (diese weitgehend ungedämpft, d.h. mit etwas größerer Amplitude) als auch die Codeinformation der fahrzeugseitigen Sende- und Empfangseinheit 1 (diese etwas gedämpft, d.h. mit etwas kleinerer Amplitude, da Codegeber 4 und Sende- und Empfangseinheit 1 einen Abstand zueinander haben).

Allerdings "hört" der Codegeber 4 diejenigen Amplituden der Schwingungszustände der von der fahrzeugseitigen Sende- und Empfangseinheit 1 ausgesendeten Codeinformation zu denjenigen Zeitpunkten nicht, zu denen die Schwingungszustände seiner eigenen gesendeten Codeinformation "b" sind.

Der Codegeber 4 weist einen Schwellwertschalter mit einem Schwellwert S₁ auf. Entsprechend den empfangenen Amplituden wertet der Codegeber 4 das Signal durch Vergleich mit dem Schwellwert S₁ aus. Alle Amplituden, die größer als der Schwellwert S₁ sind, werden als Schwingungszustand "b" bewertet, während alle Amplituden, die kleiner als der Schwellwert S₁ sind, als Schwingungszustand "a" bewertet werden. Somit wertet der Codegeber 4 aus dem empfangenen Überlagerungssignal die Codeinformation CS: "abbbabbbbaabbbab" aus.

Die fahrzeugseitige Sende- und Empfangseinheit 1 empfängt gemäß Figur 4D sowohl die von ihm selbst ausgesendete Codeinformation (diese weitgehend ungedämpft, d.h. mit etwas größerer Amplitude) als auch die Codeinformation des Codegebers 4 (diese etwas gedämpft, d.h. mit etwas kleinerer Amplitude, da Codegeber 4 und Sende- und Empfangseinheit 1 einen Abstand zueinander haben).

Die fahrzeugseitige Sende- und Empfangseinheit 1 weist ebenfalls einen Schwellwertschalter mit einem Schwellwert S₂ auf. Entsprechend den empfangenen Amplituden wertet die fahrzeugseitige Sende- und Empfangseinheit 1 das empfangene Signal aus. Alle Amplituden, die größer als der Schwellwert S₂ sind werden als Schwingungszustand "b" bewertet, während alle Amplituden, die kleiner als der Schwellwert S₂ sind, mit dem Schwingungszustand "a" bewertet werden. Somit erhält die Sende- und Empfangseinheit 1 aus dem empfangenen Überlagerungssignal die Codeinformation CS: "abbbabbbbaabbbab", die korrekterweise identisch ist mit derjenigen des Codegebers 4.

Ein Unberechtigter, der im Bereich des Codegebers 4 das dort empfangene Codesignal abhört, kann dieses nur mit Fehlern reproduzieren, so dass dann keine Berechtigung nachzuweisen ist.

Die Sicherheit des Verfahrens kann zusätzlich dadurch gesteigert werden, dass nicht nur die Zustände "a" und "b" unterschieden werden, sondern zusätzlich die absolute Amplitudenhöhe des empfangenen Signals ausgewertet wird.

Die Sollcodeinformation kann als übereinstimmendes Codegeheimnis sowohl in der fahrzeugseitigen Sende- und Empfangseinheit 1 oder dem Steuergerät 3 gespeichert sein. Nur wenn die empfangene Codeinformation des Codesignals CS mit der Sollcodeinformation übereinstimmt, wird ein Freigabesignal zum Freigeben eines Sicherheitsaggregats erzeugt.

Die Sollcodeinformation kann als übereinstimmendes Codegeheimnis auch in dem Codegeber 4 gespeichert sein. Nur wenn die von ihm empfangene Codeinformation identisch mit der Sollcodeinformation ist, wird der Codegeber 4 für weitere Funktionen und das weitere Senden von Signalen (beispielsweise weiterer Frage-Antwort-Dialog, der erst dann zur Freigabe des Sicherheitsaggregats führen kann) freigegeben.

Vorteilhafterweise wird die Codeinformation sowohl im Codegeber 4 als auch fahrzeugseitig in der Sende- und Empfangseinheit 1 oder dem Steuergerät 3 mit der Sollcodeinformation verglichen. Nur so kann ein potenzieller Dieb gezwungen werden, in beiden Richtungen gleichzeitig senden und abhören zu müssen, um ein korrektes Codesignal CS vorzutäuschen. Das gleichzeitige Senden und Abhören ist jedoch ,wie zuvor beschrieben, aufgrund der gleichen Trägerfrequenz nur äußerst schwierig zu bewerkstelligen, wodurch ein effektiver Manipulationsschutz geschaffen ist.

Die Sollcodeinformation und die Codeinformation können auch aus einem in Codegeber 4 oder fahrzeugseitigen Sende- und Empfangseinheit 1 / Steuergerät 3 gespeicherten Codegeheimnis mit Hilfe eines mathematischen Algorithmus oder einer sonstigen logischen Verknüpfung erzeugt werden. Das Codegeheimnis wird den Teilen bei einer Initialisierung mitgeteilt und dauerhaft und von außen auslesesicher gespeichert.

Die fahrzeugseitige Sende- und Empfangseinheit 1 und das Steuergerät 3 können in einem gemeinsamen Gehäuse untergebracht sein. Die fahrzeugseitige Sende- und Empfangseinheit 1 kann eine einzige Sende- und Empfangsantenne 2 aufweisen, vorausgesetzt dass diese Antenne 2 gleichzeitig senden und empfangen kann. Es können auch voneinander getrennte Sende- und Empfangsantennen im Kraftfahrzeug angeordnet sein. Es können auch mehrere Sendeantennen und mehrere Empfangsantennen im Kraftfahrzeug und auch auf dem Codegeber 4 angeordnet sein.

Die Antennen 2 sind so im Kraftfahrzeug verteilt angeordnet und sind so ausgestaltet, dass mit einem Sendesignal möglichst alle Bereiche im oder in unmittelbarer Umgebung des Kraftfahrzeugs mit einem elektromagnetischen Feld durchsetzt werden (dies entspricht der Reichweite der Signale). Umgekehrt werden dann sicher Signale aus diesen Bereichen empfangen.

Unter dem Begriff Codegeber 4 ist - unabhängig von seiner äußeren Form - eine Vorrichtung zu verstehen, die ein Signal empfängt und codiertes Signal zurücksendet. Der Codegeber 4 kann dabei auf einer Chipkarte/Scheckkarte, in einem Schlüsselgriff oder sonstigen Gehäusen angeordnet sein. Mit dem Codegeber 4 kann ein Schließsystem eines Kraftfahrzeugs und eine Wegfahrsperre ohne Zuhilfenahme eines mechanischen Schlüssels als Sicherheitsaggregat fernbedient werden. Der Codegeber 4 weist üblicherweise einen Transponder auf, der infolge eines empfangenen Signals automatisch ein Signal zurücksendet. Üblicherweise bezieht der Transponder seine Spannungsversorgung zum Senden eines Signals aus dem elektromagnetischen Feld des empfangenen Signals. Der Transponder kann auch über eine eigene Batterie oder einen Akkumulator mit Energie versorgt werden.

Unter dem Frage-Antwort-Dialog ist eine bidirektionale Kommunikation zwischen der Sende- und der Empfangseinheit 1 und dem Codegeber 4 zu verstehen, bei der ein erstes, empfangenes Fragesignal als Auslöser für das Aussenden eines Antwortsignals dient. Es können auch mehrere Frage-Antwort-Dialoge stattfinden, um eine Berechtigung zum Lösen der Wegfahrsperre oder zum Ver- und Entriegeln des Schließsystems nachzuweisen.

Das erste Signal 7, das zweite Signal 6 und das Freigabesignal (sowie das Fragesignal und das Antwortsignal des Frage-Antwort-Dialogs) sind codierte Signale, die jeweils eine Codeinformation aufweisen. Die Codeinformation ist eine binär codierte Information, die viele Bitstellen aufweist. Durch das Codieren/Verschlüsseln ändert sich die Codeinformation bei jedem neuen Verschlüsselungsvorgang. Der Codeinformation können mehrere Bit vorausgehen oder nachfolgen, die gegebenenfalls zu einer sicheren Datenübertragung benötigt werden. Die einem empfangenen Signal entnommene Codeinformation wird mit einer gespeicherten oder erzeugten Sollcodeinformation verglichen.

Das erste Signal 7 und das zweite Signal 6 können auch in mehreren Abschnitte unterteilt und jeweils abschnittsweise ausgesendet werden, wobei die jeweiligen Abschnitte auch zumindest teilweise zeitlich überlagert gesendet werden.

Das Verfahren zum Betreiben eines Zugangskontrollsystems ist nicht nur auf die Verwendung in einem Kraftfahrzeug beschränkt. Es kann auch bei weiteren Objekten verwendet werden, wie Gebäuden, Sicherheitsräumen, Garagen, Personalcomputern, Mobiltelefonen, Geldautomaten, Chipkarten oder anderen Geräten, bei denen eine Berechtigung für die Zugangskontrolle oder Benutzung abgefragt wird.

## Patentansprüche

1. Verfahren zum Betreiben eines Zugangskontrollsystems, insbesondere eines Zugangskontrollsystems für ein Kraftfahrzeug, wobei das Zugangskontrollsystem aufweist:
- eine Sende- und Empfangseinheit in einem tragbaren Codegeber (4), der bei Auslösung ein erstes Signal (7) aussendet, und
- eine Sende- und Empfangseinheit (1) im Kraftfahrzeug, die bei Auslösung ein zweites Signal (6) aussendet
**gekennzeichnet durch** folgende Schritte:
- dass sowohl die codegeberseitige Sende- und Empfangseinheit (8) als auch die fahrzeugseitige Sende- und Empfangseinheit (1) das erste Signal (7) bzw. das zweite Signal (6) bei etwa gleicher Trägerfrequenz zumindest teilweise zeitlich überlappend aussenden,
- dass aus der Überlagerung von erstem Signal (7) und zweitem Signal (6) ein Codesignal (CS) entsteht, welches sowohl von der fahrzeugseitigen Sende- und Empfangseinheit (1) als auch von der codegeberseitigen Sende- und Empfangseinheit (8) empfangen wird und aus dem Codesignal (CS) eine Codeinformation entnommen wird, und
- dass im Kraftfahrzeug und/oder im Codegeber (4) die jeweils entnommene Codeinformation mit jeweils einer Sollcodeinformation verglichen wird und bei Übereinstimmung zwischen Codeinformation und Sollcodeinformation ein Freigabesignal erzeugt wird.

2. Verfahren nach Anspruch 1, **dadurch gekennzeichnet, dass** entweder die fahrzeugsseitige Sende- und Empfangseinheit (1) oder die codegeberseitige Sende- und Empfangseinheit (8) ein Startsignal (5) aussenden, wobei das Senden des ersten Signals (7) und des zweiten Signals (6) infolge des empfangenen Startsignals (5) eine festgelegte Zeitdauer danach gestartet wird.

3. Verfahren nach Anspruch 1, **dadurch gekennzeichnet, dass** das Freigabesignal einen Frage-Antwort-Dialog zwischen Codegeber (4) und Sende- und Empfangseinheit (1) auslöst oder an ein Sicherheitsaggregat im Kraftfahrzeug gesendet wird, wodurch dieses Sicherheitsaggregat bei nachgewiesener Berechtigung entriegelt wird.

4. Verfahren nach Anspruch 1, **dadurch gekennzeichnet, dass** zum Erzeugen sowohl des ersten Signals (7) als auch des zweiten Signals (6) jeweils ein übereinstimmendes Codegeheimnis in der Sende- und Empfangseinheit (1) bzw. dem Codegeber (4) gespeichert ist oder durch einen Rechenalgorithmus jeweils derart neu errechnet wird, dass bei jeder Übertragung das entstandene Codesignal (CS) eine neue Codeinformation enthält oder dass zu Beginn jeder Übertragung das Codegeheimnis verschlüsselt übertragen wird.

5. Verfahren nach einem der vorhergehenden Ansprüche, **dadurch gekennzeichnet, dass** die Signale bei einer Trägerfrequenz von etwa 315 MHz, von etwa 433 MHz oder von etwa 868 MHz ausgesendet werden.

6. Verfahren nach einem der vorhergehenden Ansprüche, **dadurch gekennzeichnet, dass** der Codegeber (4) eine Startinformation zu Beginn des ersten Signals (7) aussendet, wodurch die fahrzeugsseitige Sende- und Empfangseinheit (1) auf den Codegeber (4) synchronisiert wird.

7. Verfahren nach einem der vorhergehenden Ansprüche, **dadurch gekennzeichnet, dass** nach erfolgreichem Abschluss des Frage-Antwort-Dialogs ein weiteres Freigabesignal erzeugt wird, mit dem das Sicherheitsaggregat freigegeben wird.

8. Verfahren nach einem der vorhergehenden Ansprüche, **dadurch gekennzeichnet, dass** die fahrzeugsseitige Sende- und Empfangseinheit (1) und die codegeberseitige Sende- und Empfangseinheit jeweils zeitgleich Signale senden und empfangen können.

9. Zugangskontrollsystem, insbesondere für ein Kraftfahrzeug, das aufweist:
- eine Sende- und Empfangseinheit in einem tragbaren Codegeber (4), der bei Auslösung ein erstes Signal (7) aussendet, und
- eine Sende- und Empfangseinheit (1) im Kraftfahrzeug, die bei Auslösung ein zweites Signal (6) aussendet
**dadurch gekennzeichnet,**
- **dass** sowohl die codegeberseitige Sende- und Empfangseinheit (8) als auch die fahrzeugseitige Sende- und Empfangseinheit (1) das erste Signal (7) bzw. das zweite Signal (6) bei etwa gleicher Trägerfrequenz zumindest teilweise zeitlich überlappend aussenden,
- **dass** aus der Überlagerung von erstem Signal (7) und zweitem Signal (6) ein Codesignal (CS) entsteht, welches sowohl von der fahrzeugseitigen Sende- und Empfangseinheit (1) als auch von der codegeberseitigen Sende- und Empfangseinheit (8) empfangen wird und aus dem Codesignal (CS) eine Codeinformation entnommen wird, und
- **dass** im Kraftfahrzeug und/oder im Codegeber (4) eine Vergleichseinheit vorhanden ist, die die jeweils entnommene Codeinformation mit jeweils einer Sollcodeinformation vergleicht und bei Übereinstimmung zwischen Codeinformation und Sollcodeinformation ein Freigabesignal erzeugt.

## Claims

1. Method for operation of an access control system, in particular an access control system for a motor vehicle, with the access control system having:
- a transmitting and receiving unit in a portable code transmitter (4) which transmits a first signal (7) when initiated, and
- a transmitting and receiving unit (1) in the motor vehicle, which transmits a second signal (6) when initiated,
**characterized by** the following steps:
- in that both the transmitting and receiving unit (8) at the code transmitter end and the transmitting and receiving unit (1) at the vehicle end transmit the first signal (7) and the second signal (6), respectively, at approximately the same carrier frequency, and at least partially overlapping in time,
- in that the superimposition of the first signal (7) and of the second signal (6) is used to produce a code signal (CS) which is received both by the transmitting and receiving unit (1) at the vehicle end and by the transmitting and receiving unit (8) at the code transmitter end, and code information is taken from the code signal (CS), and
- in that the code information which is in each case taken is compared in the motor vehicle and/or in the code transmitter (4) with in each case one nominal code information item, and an enable signal is produced if there is a match between the code information and the nominal code information.

2. Method according to Claim 1, **characterized in that** either the transmitting and receiving unit (1) at the vehicle end or the transmitting and receiving unit (8) at the code transmitter end transmits a start signal (5), with the transmission of the first signal (7) and of the second signal (6) being started after a defined time period, as a consequence of the received start signal (5).

3. Method according to Claim 1, **characterized in that** the enable signal initiates a question and answer dialogue between the code transmitter (4) and the transmitting and receiving unit (1), or is sent to a security unit in the motor vehicle, as a result of which this security unit is unlocked if authorization is verified.

4. Method according to Claim 1, **characterized in that** a matching code secret is in each case stored in the transmitting and receiving unit (1) and in the code transmitter (4), respectively, in order to produce both the first signal (7) and the second signal (6), or is in each case recalculated by means of a computation algorithm such that, in each transmission, the resultant code signal (CS) contains new code information, or **in that** the code secret is transmitted in scrambled form at the start of each transmission.

5. Method according to one of the preceding claims, **characterized in that** the signals are transmitted at a carrier frequency of about 315 MHz, of about 433 MHz or of about 868 MHz.

6. Method according to one of the preceding claims, **characterized in that** the code transmitter (4) transmits start information at the start of the first signal (7), by which means the transmitting and receiving unit (1) at the vehicle end is synchronized to the code transmitter (4).

7. Method according to one of the preceding claims, **characterized in that**, after successful completion of the question and answer dialogue, a further enable signal is produced, and enables the security unit.

8. Method according to one of the preceding claims, **characterized in that** the transmitting and receiving unit (1) at the vehicle end and the transmitting and receiving unit at the code transmitter end can in each case transmit and receive signals at the same time.

9. Access control system, in particular for a motor vehicle, which has:
- a transmitting and receiving unit in a portable code transmitter (4) which transmits a first signal (7) when initiated, and
- a transmitting and receiving unit (1) in the motor vehicle, which transmits a second signal (6) when initiated,
**characterized**
- **in that** both the transmitting and receiving unit (8) at the code transmitter end and the transmitting and receiving unit (1) at the vehicle end transmit the first signal (7) and the second signal (6), respectively, at approximately the same carrier frequency, and at least partially overlapping in time,
- **in that** the superimposition of the first signal (7) and of the second signal (6) is used to produce a code signal (CS) which is received both by the transmitting and receiving unit (1) at the vehicle end and by the transmitting and receiving unit (8) at the code transmitter end, and code information is taken from the code signal (CS), and
- **in that** a comparison unit in the motor vehicle and/or in the code transmitter (4) compares the code information which is in each case taken with in each case one nominal code information item, and an enable signal is produced if there is a match between the code information and the nominal code information.

## Revendications

1. Procédé d'exploitation d'un système de contrôle d'accès, en particulier d'un système de contrôle d'accès pour un véhicule, dans lequel le système de contrôle d'accès présente :
- une unité d'émission et de réception dans un générateur de code (4) portable, lequel, en cas de déclenchement, émet un premier signal (7),
- une unité d'émission et de réception (1) dans le véhicule qui, en cas de déclenchement, émet un second signal (6),
**caractérisé par** les étapes suivantes :
- aussi bien l'unité d'émission et de réception (8) côté générateur de code que l'unité d'émission et de réception (1) côté véhicule émettent le premier signal (7) et le second signal (6), approximativement à la même fréquence porteuse, de manière superposée temporellement tout au moins en partie,
- la superposition du premier signal (7) et du second signal (6) produit un signal de code (CS) qui est reçu tant par l'unité d'émission et de réception (1) côté véhicule que par l'unité d'émission et de réception (8) côté générateur de code et une information code est extraite du signal de code (CS), et
- dans le véhicule et/ou dans le générateur de code (4), l'information code respectivement extraite est comparée respectivement avec une information code de consigne et, en cas de concordance entre l'information code et l'information code de consigne, un signal de libération est produit.

2. Procédé selon la revendication 1, **caractérisé en ce que** l'unité d'émission et de réception (1) côté véhicule ou l'unité d'émission et de réception (8) côté générateur de code émet un signal de démarrage (5), si bien que l'émission du premier signal (7) et du second signal (6) est démarrée, par suite du signal de démarrage (5) reçu, ensuite après une durée définie.

3. Procédé selon la revendication 1, **caractérisé en ce que** le signal de libération déclenche un dialogue par questions-réponses entre générateur de code (4) et unité d'émission et de réception (1) ou est envoyé à un organe de sécurité dans le véhicule, de sorte que cet organe de sécurité est déverrouillé si l'habilitation est prouvée.

4. Procédé selon la revendication 1, **caractérisé en ce que**, pour produire aussi bien le premier signal (7) que le second signal (6), un code secret concordant est enregistré respectivement dans l'unité d'émission et de réception (1) et le générateur de code (4) ou est calculé, par un algorithme de calcul, respectivement de façon qu'à chaque transmission, le signal de code (CS) produit contient une nouvelle information code, ou **en ce que**, au début de chaque transmission, le code secret est transmis de manière chiffrée.

5. Procédé selon l'une des revendications précédentes, **caractérisé en ce que** les signaux sont émis à une fréquence porteuse d'approximativement 315 MHz, d'approximativement 433 MHz ou d'approximativement 868 MHz.

6. Procédé selon l'une des revendications précédentes, **caractérisé en ce que** le générateur de code (4) émet une information de démarrage au début du premier signal (7), de sorte que l'unité d'émission et de réception (1) côté véhicule est synchronisée avec le générateur de code (4).

7. Procédé selon l'une des revendications précédentes, **caractérisé en ce que**, à la fin réussie du dialogue par questions-réponses, un autre signal de libération, au moyen duquel l'organe de sécurité est libéré, est émis.

8. Procédé selon l'une des revendications précédentes, **caractérisé en ce que** l'unité d'émission et de réception (1) côté véhicule et l'unité d'émission et de réception côté générateur de code peuvent émettre et recevoir respectivement des signaux en même temps.

9. Système de contrôle d'accès, en particulier pour un véhicule, qui présente :
- une unité d'émission et de réception dans un générateur de code (4) portable, lequel, en cas de déclenchement, émet un premier signal (7), et
- une unité d'émission et de réception (1) dans le véhicule qui, en cas de déclenchement, émet un second signal (6),
**caractérisé en ce :**
- **qu'**aussi bien l'unité d'émission et de réception (8) côté générateur de code que l'unité d'émission et de réception (1) côté véhicule émettent le premier signal (7) et le second signal (6), approximativement à la même fréquence porteuse, de manière superposée temporellement tout au moins en partie,
- **que** la superposition du premier signal (7) et du second signal (6) produit un signal de code (CS) qui est reçu tant par l'unité d'émission et de réception (1) côté véhicule que par l'unité d'émission et de réception (8) côté générateur de code et une information code est extraite du signal de code (CS), et
- **que** dans le véhicule et/ou dans le générateur de code (4), il est prévu une unité de comparaison qui compare l'information code respectivement extraite à une information code de consigne et, en cas de concordance entre l'information code et l'information code de consigne, produit un signal de libération.
